# EUROPEAN PATENT SPECIFICATION

(11) **EP 2 826 191 B1**
(45) Date of publication and mention of the grant of the patent: **05.10.2022**
(21) Application number: 12708845.8
(22) Date of filing: 15.03.2012
(51) Int. Cl.: H04L 5/00, H04B 7/02, H04W 72/04

(54) **WIRELESS MULTI-FLOW COMMUNICATIONS IN THE UPLINK**
DRAHTLOSE MULTIFLOW-KOMMUNIKATION IN DER AUFWÄRTSSTRECKE
COMMUNICATIONS SANS FIL MULTI-FLUX DANS LA LIAISON MONTANTE

(43) Date of publication of application: 21.01.2015
(73) Proprietor: Nokia Solutions and Networks Oy, 02610 Espoo (FI)
(72) Inventor: ROSA, Claudio, DK-8900 Randers (DK); WU, Chunli, Beijing 102208 (CN)
(74) Representative: Hepworth Browne
(86) International application number: PCT/EP2012/054539
(87) International publication number: WO 2013/135290

(56) References cited:
- WO-A1-2011/100492
- US-A1- 2010 067 435

## Description

The application relates to communications over multiple data flows in a communication system and more particularly to multiple data flows in wireless uplink.

A communication system can be seen as a facility that enables communication sessions between two or more nodes such as fixed or mobile communication devices, access points such as base stations, servers and so on. A communication system and compatible communicating entities typically operate in accordance with a given standard or specification which sets out what the various entities associated with the system are permitted to do and how that should be achieved. For example, the standards, specifications and related protocols can define the manner how communication devices shall communicate with the access points, how various aspects of the communications shall be implemented and how the devices shall be configured.

Signals can be carried on wired or wireless carriers. Examples of wireless systems include public land mobile networks (PLMN) such as cellular networks, satellite based communication systems and different wireless local networks, for example wireless local area networks (WLAN). Wireless systems can be divided into coverage areas referred to as cells, such systems being often referred to as cellular systems. A cell can be provided by a base station, there being various different types of base stations. Different types of cells can provide different features. For example, cells can have different shapes, sizes and other characteristics. A cell is typically controlled by a control node. One control node may control one or more stations providing cells.

A user can access the communication system by means of an appropriate communication device. A communication device of a user is often referred to as user equipment (UE) or terminal. A communication device is provided with an appropriate signal receiving and transmitting arrangement for enabling communications with other parties. Typically a communication device is used for enabling receiving and transmission of communications such as speech and data. In wireless systems a communication device provides a transceiver station that can communicate with another communication device such as e.g. a base station and/or another user equipment. The communication device may access a carrier provided by a base station, and transmit and/or receive communications on the carrier.

An example of cellular communication systems is an architecture that is being standardized by the 3rd Generation Partnership Project (3GPP). A recent development in this field is often referred to as the long-term evolution (LTE) of the Universal Mobile Telecommunications System (UMTS) radio-access technology. In LTE base stations are commonly referred to as enhanced NodeBs (eNB). An eNB can provide coverage for an entire cell or similar radio service area. In LTE a node providing a relatively wide coverage area can be referred to as a macro eNode B. Network nodes can also provide smaller service areas. Examples of such local radio service area network nodes include femto nodes such as Home eNBs (HeNB), pico nodes such as pico eNodeBs (pico-eNB) and remote radio heads. The smaller radio service areas can be located wholly or partially within a larger radio service area.

A device within an area may communicate with more than one cell. Communication with more than one cell can be referred to as multi-flow communications. The scheduling of communications by a device with more than one cell can be challenging in certain scenarios. For example, in accordance with the current proposals multi-flow transmission uplink scheduling actions are delayed in the eNB controlling the primary cell (PCell; master node) while monitoring the uplink traffic scheduled on a secondary cell (SCell; slave node). The uplink packet scheduler associated with the PCell can then determine based on this monitoring whether or not additional resources need to be allocated for the uplink provided by the PCell. In case of multi-flows in the uplink, each eNB can operate independently based on a buffer status report (BSR) received from the relevant communication device. According to another possibility some buffer state information is reported to the other eNB, typically over an X2 interface. The additional uplink capacity that the PCell / master node may need to schedule is determined by comparing the uplink data rate scheduled by the slave node with the uplink buffer state information available at the master node.

These proposals may not always be optimal and/or may have some limitations in view of flexibility and/or efficiency. For example, the slave node may not be aware whether or not the master node is scheduling uplink capacity. The slave node may also not be aware of the uplink resources that are available at the master node. For example, the slave node may not know the average capacity of a PCell. Also, even if some information is exchanged, the mechanism may be relatively slow since if it requires an uplink scheduler of the master node to make measurements of the data throughput scheduled by the slave node. Overall, a solution to control scheduling by the at least two nodes involved may be desired.

It is noted that the above discussed issues are not limited to any particular communication environment and station apparatus but may occur in any appropriate system enabling multiple uplink connections.

US 2010/067435 relates to a method of coordinating the uplink transmissions from at least one mobile unit to a plurality of base stations. The method is implemented in a control and data plane entity and includes scheduling, at the control plane function, uplink signals for transmission from the mobile unit(s) to the plurality of base stations. The method also includes receiving, at the data plane function from the plurality of base stations, signals including scheduled uplink signals transmitted from the mobile unit(s) to the plurality of base stations. The method further includes estimating, at the data plane function, information bits transmitted in the scheduled uplink signals using the received signals and channel state information indicative of a plurality of wireless communication links between the mobile unit(s) and the plurality of base stations.

WO2011/100492 discloses splitting data in a wireless communications network. Data may be split to use multiple base stations for transmission to user equipment in order to improve the bandwith if a UE is on a cell edge, or may be split by user equipment for transmission to multiple base stations in order to improve handover. Data splitting may be performed at the Packet Data Convergence Protocol layer, at the Radio Link Control layer, or at the Media Access Control layer on user equipment or on a base station. Data may instead be split in a network node, such as in a serving gateway, in order to reduce X2 interface load or delay carrier aggregation.

Embodiments of the invention aim to address one or several of the above issues.

In accordance with a first aspect of the invention there is provided a method for scheduling uplink resources in a node, the method in accordance with claim 1.

In a second aspect of the invention there is provided a method for communicating buffer status information by a device, the method being in accordance with claim 2.

In a third aspect of the invention there is provided a method for controlling scheduling of uplink resources by a node, the method in accordance with claim 3.

In a fourth aspect of the invention there is provided method for controlling scheduling of uplink resources, said method being performed by a secondary node and where the method is in accordance with claim 4.

As is disclosed herein the scheduling weight information can be applied to buffer status reports.

Scheduling weight information may be determined on information about the uplink throughput of a cell.

An estimate of an uplink data throughput that is available for scheduling by a node may be provided and used in determining the weight information. Information about estimated uplink data throughput may be exchanged between the primary node and the secondary node.

Buffering status reports may be weighted on a per cell basis and/or on a per communication device basis.

In a fifth aspect of the invention there is provided an apparatus for use in a primary node and where the apparatus is in accordance with claim 8. And in a sixth aspect there is provided an apparatus for use in a communication device, the apparatus in accordance with claim 9. In seventh and eighth aspects of the invention there is respectively provided an apparatus for use in a primary node and an apparatus for use in a secondary node, where the apparatus for use in the primary node is in accordance with claim 10 and the apparatus for use in the secondary node in accordance with claim 11.

In yet further aspects of the invention there is provided a network node according to claim 12 in which the network node is a primary node and a network node in accordance with claim 14 in which the network node is a secondary node. In still yet another aspect of the invention there is provided user equipment according to claim 13.

In still yet further aspects of the invention there is provided a computer program according to claims 16, 17, 18 and 19.

In yet another aspect there is provided a communications system according to claim 15.

Embodiments will now be described in further detail, by way of example only, with reference to the following examples and accompanying drawings, in which:
Figure 1 shows a schematic diagram of a network according to some embodiments;
Figure 2 shows a schematic diagram of a mobile communication device according to some embodiments;
Figure 3 shows a schematic diagram of a control apparatus according to some embodiments; and
Figures 4 to 6 show schematic flowcharts according to certain embodiments.

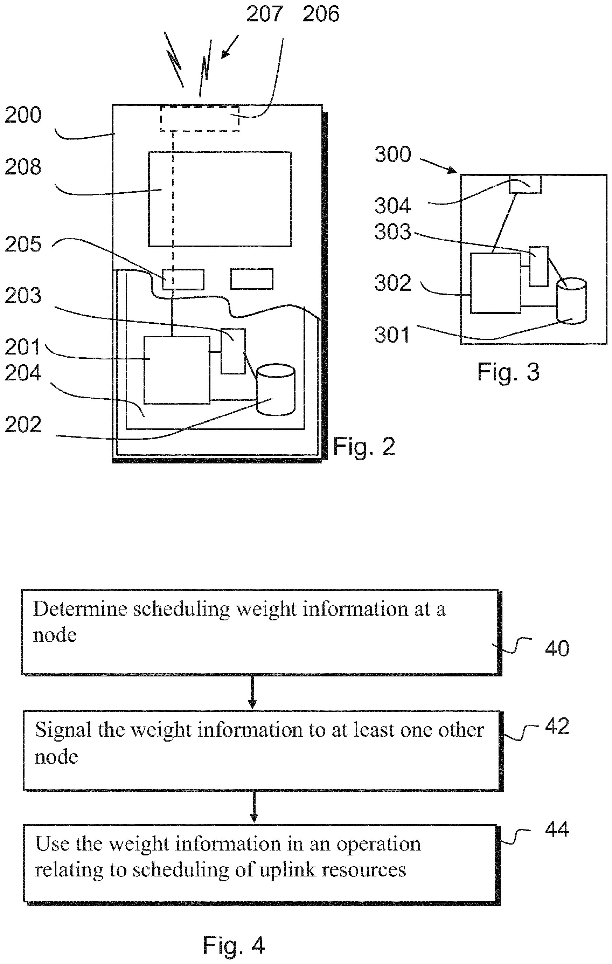

The present invention is based on the embodiments disclosed below with reference to Figures 4 to 6. Additional embodiments and examples disclosed below are given for illustrative purposes.

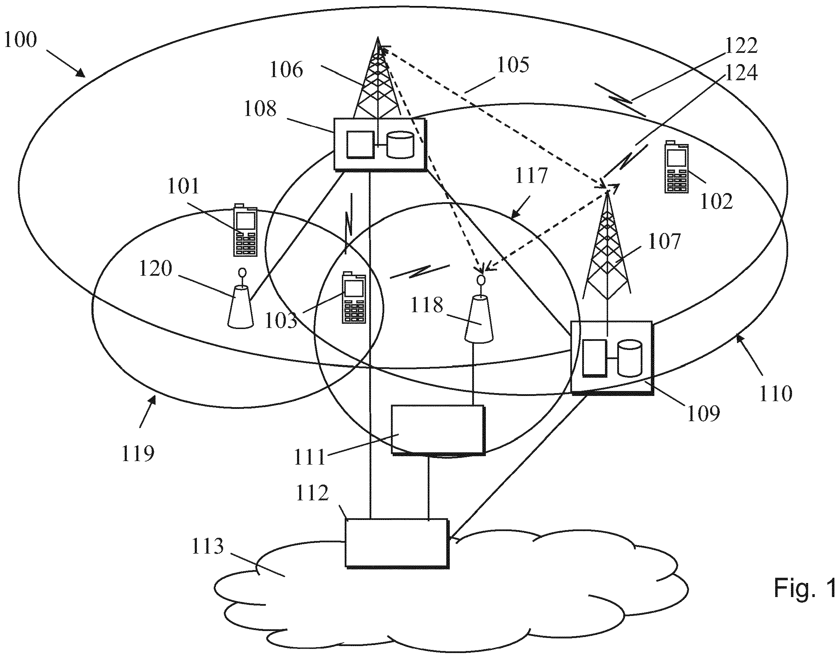

In the following certain exemplifying embodiments are explained with reference to a wireless or mobile communication system serving mobile communication devices. Before explaining in detail the exemplifying embodiments, certain general principles of a wireless communication system, access systems thereof, and mobile communication devices are briefly explained with reference to Figures 1 to 3 to assist in understanding the technology underlying the described examples.

A non-limiting example of the recent developments in communication system architectures is the long-term evolution (LTE) of the Universal Mobile Telecommunications System (UMTS) that is being standardized by the 3rd Generation Partnership Project (3GPP). The LTE employs a mobile architecture known as the Evolved Universal Terrestrial Radio Access Network (E-UTRAN). Base stations of such systems are known as evolved or enhanced Node Bs (eNBs) and may provide E-UTRAN features such as user plane Radio Link Control/Medium Access Control/Physical layer protocol (RLC/MAC/PHY) and control plane Radio Resource Control (RRC) protocol terminations towards the communication devices. Other examples of radio access system include those provided by base stations of systems that are based on technologies such as wireless local area network (WLAN) and/or WiMax (Worldwide Interoperability for Microwave Access).

A communication device 101, 102, 103 can be provided wireless access via base stations or similar wireless transmitter and/or receiver nodes providing radio service areas or cells. In figure 1 different neighbouring and/or overlapping systems or radio service areas 100, 110, 117 and 119 are shown being provided by base stations 105, 106, 118 and 119. It is noted that the cell borders are schematically shown for illustration purposes only in Figure 1. It shall be understood that the sizes and shapes of the cells or other radio service areas may vary considerably from the similarly sized omni-directional shapes of Figure 1. A base station site can provide one or more cells or sectors, each sector providing a cell or a subarea of a cell. Each communication device and base station may have one or more radio channels open at the same time and may send signals to and/or receive signals from more than one source

Base stations are typically controlled by at least one appropriate controller apparatus so as to enable operation thereof and management of mobile communication devices in communication with the base stations. The control apparatus can be interconnected with other control entities. The control apparatus can typically be provided with memory capacity and at least one data processor. The control apparatus and functions may be distributed between a plurality of control units. In some embodiments, each base station can comprise a control apparatus. In alternative embodiments, two or more base stations may share a control apparatus. In some embodiments the control apparatus may be respectively provided in each base station.

Different types of possible cells include those known as macro cells, pico cells and femto cells. For example, transmission/reception points or base stations can comprise wide area network nodes such as a macro eNode B (eNB) which may, for example, provide coverage for an entire cell or similar radio service area. Base station can also be provided by small or local radio service area network nodes, for example Home eNBs (HeNB), pico eNodeBs (pico-eNB), or femto nodes. Some applications utilise radio remote heads (RRH) that are connected to for example an eNB. Cell areas typically overlap, and thus a communication device in an area can listen and transmit to more than one base station. Smaller radio service areas can be located entirely or at least partially within a larger radio service area. A communication device may thus communicate with more than one cell. In some embodiments network nodes can comprise a combination of wide area network nodes and small area network nodes deployed using the same frequency carriers (e.g. co-channel deployment).

In particular, Figure 1 depicts a primary or master cell 100. In this example the primary cell 100 can be provided by a wide area base station 106 provided by a macro-eNB. The macro-eNB 106 transmits and receives data over the entire coverage of the cell 100. A secondary cell 110 in this example is a pico-cell. A further cell can be provided by a suitable small area network node 118 such as Home eNBs (HeNB) (femto cell) or another pico eNodeBs (pico-eNB). A yet further cell 119 is shown to be provided by a remote radio head (RRH) 120 connected to the base station apparatus of cell 100.

Base station may communicate via each other via fixed line connection and/or air interface. The logical connection between the base station nodes can be provided for example by an X2 interface. In Figure 1 this interface is shown by the dashed line denoted by 105.

In Figure 1 stations 106 and 107 are shown as connected to a wider communications network 113 via gateway 112. A further gateway function may be provided to connect to another network. The smaller stations 118 and 120 can also be connected to the network 113, for example by a separate gateway function and/or via the macro level cells. In the example, station 118 is connected via a gateway 111 whilst station 120 connects via the controller apparatus 108.

A possible mobile communication device for transmitting to and receiving from a plurality of base stations will now be described in more detail with reference to Figure 2 showing a schematic, partially sectioned view of a communication device 200. Such a communication device is often referred to as user equipment (UE) or terminal. An appropriate mobile communication device may be provided by any device capable of sending radio signals to and/or receiving radio signals from multiple cells. Non-limiting examples include a mobile station (MS) such as a mobile phone or what is known as a 'smart phone', a portable computer provided with a wireless interface card or other wireless interface facility, personal data assistant (PDA) provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services include two-way or multi-way calls, data communication or multimedia services or simply an access to a data communications network system, such as the Internet. User may also be provided broadcast or multicast data. Non-limiting examples of the content include downloads, television and radio programs, videos, advertisements, various alerts and other information.

The mobile device may receive and transmit signals over an air interface 207 with multiple base stations via an appropriate transceiver apparatus. In Figure 2 transceiver apparatus is designated schematically by block 206. The transceiver apparatus 206 may be provided for example by means of a radio part and associated antenna arrangement. The antenna arrangement may be arranged internally or externally to the mobile device.

A mobile communication device is also provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204.

The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

Figure 3 shows an example of a control apparatus for a communication system, for example to be coupled to and/or for controlling a transceiver base station. The control apparatus 300 can be arranged to provide control on communications in the service area of a cell. In some embodiments a base station can comprise a separate control apparatus. In other embodiments the control apparatus can be another network element. The control apparatus 300 can be configured to provide control functions in association with cell aggregation or other multi-flow arrangement by means of the data processing facility in accordance with certain embodiments described below. For this purpose the control apparatus comprises at least one memory 301, at least one data processing unit 302, 303 and an input/output interface 304. Via the interface the control apparatus can be coupled to a receiver and a transmitter of the base station. The control apparatus can be configured to execute an appropriate software code to provide the control functions. It shall be appreciated that similar component can be provided in a control apparatus provided elsewhere in the system for controlling reception of sufficient information for decoding of received information blocks.

A wireless communication device, such as a mobile or base station, can be provided with a Multiple Input / Multiple Output (MIMO) antenna system for enabling multi-flow communications. MIMO arrangements as such are known. MIMO systems use multiple antennas at the transmitter and receiver along with advanced digital signal processing to improve link quality and capacity. More data can be received and/or sent where there are more antennae elements.

A device can receive from and/or transmit to more than one station at a time. Use of multiple flows is utilised e.g. in techniques known as carrier aggregation (CA) and/or coordinated multipoint (CoMP) transmissions. In carrier aggregation a plurality of component carriers are aggregated to increase bandwidth. An arrangement providing this is X2-based inter-site LTE carrier aggregation (CA) / coordinated multipoint (CoMP). X2 is a logical interface between base stations, for example enhanced NodeBs (eNB) as shown by the dashed lines 105 in Figure 1.

When configured with inter-site CA/CoMP a communication device / user equipment (UE) can be connected to multiple non-collocated eNBs. In Figure 1 device 102 is shown to communicate over wireless links 122 and 124 with stations 106 and 107, respectively. Similarly, device 103 is shown to have multiple wireless data flows with nodes 108 and 118. The links can be via separate frequency carriers or on a frequency. eNB 108 can provide a primary access point or node controlling a primary cell (PCell), and possibly one or more secondary cells (SCell). The other eNB(s) 109 involved in the communications can control one or more secondary cells. The current thinking is that data split in the downlink takes place in one of the transmission nodes. Such a node can be referred to as master node, and is typically the node controlling the PCell. That would be node 108 in Figure 1. Part of the originated data flows is transmitted to the communication device via the master node using one or more carrier frequencies, while the rest of the data flows are forwarded via X2 link 105 to a secondary transmission point 107, often referred to as a slave node, and is then delivered on the downlink from the slave node to the communication device 102 using one or more carrier frequencies. The carrier frequencies used by the slave node are typically other than those used by the master node.

Multi-flow transmission in the uplink (UL) is also possible. This may require that the user equipment (UE) 102 is configured with inter-site CA/CoMP and supports dual-carrier transmission in the UL. Also, the UE 102 can be configured with inter-site CA/CoMP but such that it only supports single-carrier transmission in the uplink (UL). The master-slave (e.g. macro-pico cell) UL switching pattern for such communications can be configured by higher layers. During macrospecific and pico-specific subframes the UE can be scheduled physical uplink shared channel (PUSCH) resources by the corresponding node, i.e. PUSCH is available on both PCell (master node / macro cell) and SCell (slave node / pico cell) . However, the PUSCH resources cannot be scheduled in the same subframe for the master and he slave.

An underlying assumption with the X2-based inter-site CA/CoMP is that each node performs scheduling independently. This can be done at least partially based on buffer status reports (BSR). For example, in LTE Release 10 specifications buffer status reports (BSR) can be transmitted from UEs to any of the available serving cells in the UL. However, a problematic situation can occur in handling of BSRs when there are multiple scheduling nodes in connection with UL multi-flow transmission. There are various proposals how to convey information for uplink scheduling in case of LTE multi-flow transmission in UL. One of these is a scenario where BSRs by the UEs are always transmitted on both PCell and SCell. According to another proposal UE can decide if it transmits BSR on PCell or SCell. According to a possibility this can be configured via radio resource control (RRC). It is also possible to transmit BSR on PCell only. Regardless of where the report is transmitted, a solution might be desired how to control and/or coordinate scheduling for uplink transmissions in the primary and/or secondary cells.

In accordance with an embodiment shown in the flowchart of Figure 4 scheduling weight information is determined at 40. The weight information is signalled at 42 from a primary (master) node to at least one secondary (slave) node and/or communication device. The scheduling weight information can then be used at 44 by an appropriate node receiving the information. For example, the information may be signalled to the secondary node and/or the communication device and buffer status information can be weighted accordingly in before scheduling decisions are made.

Determination of the scheduling weights at a primary node can be based on information sent by the at least one secondary node to the primary node. The primary node may for example calculate or estimate appropriate scheduling weight(s) based on measured or estimated uplink throughput and/or other relevant information. For example, explicit information about estimated UL capacity may be provided. Alternatively, or additionally the determination may be based on e.g. measurements of the scheduled throughput. Information regarding UL data reception from the secondary node may also be used in here.

Exchange of information between the primary and secondary nodes may be needed in certain embodiments for the calculations / estimations of the weight (s). Examples for this will be given below.

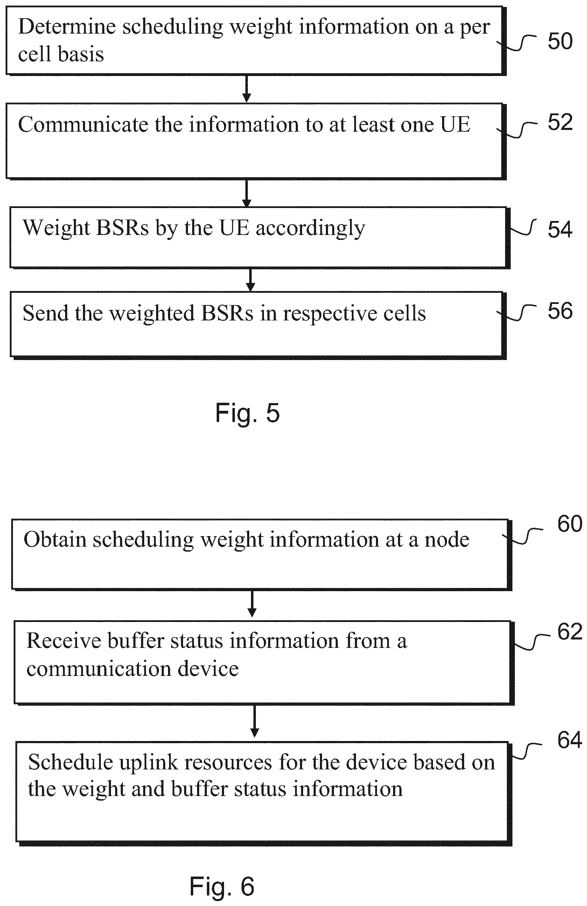

Figure 5 shows an embodiment where the scheduling weight information is determined at 50 and communicated at 52 to a communication device. The received information is then used at 54 by the communication device. The communication device can apply the weight information to at least one BSR in before transmission thereof to a relevant node at 56.

According to a possibility weights are calculated in a master node and signalled then to relevant UEs. The signalling may be for example via radio resource control (RRC). The UE can then weight the BRS value accordingly before sending BSR towards the corresponding node. The weight may be cell-specific and an UL BSR weighting may be provided in a cell-specific manner. For example PCell-specific BSR can be transmitted on the PCell, etc. For example, the UE can report x% of the buffer status to a PCell and (100-x) % of the buffer status to a SCell where the UL BSR weight x is configured by the master eNB. Also, different UEs with data radio bearers (DRB) with different quality of service (QoS) can have different weights. For example, delay sensitive traffic may be scheduled via PCell while delay tolerant traffic, especially if there is large data amount, may be more suitably scheduled via a SCell. Cell-specific can refer to difference serving cells of a UE such that two cells can have different weights.

It is noted that cell specific this does not mean that all UEs in a cell shall apply the same weight. For example, UE specific weight can also be applied. From UE point of view it does not matter if the weighting is UE specific and/or cell-specific. Instead, a UE can apply a weight to buffer status reporting as received regardless how the weight is defined.

Figure 6 shows use of scheduling weight information obtained at 60 in a primary and/or secondary node. In a primary node the step of obtaining may comprise the determining step 40 of Figure 4. In a secondary node the step of obtaining may comprise receiving of the information from a primary node. Buffer status information is received at 62 from at least one communication device. Scheduling of the uplink for the at least one device is then provided at 64 at least in part based on the buffer status information and the weight information.

In accordance with an embodiment the secondary nodes are provided with weight information but no other information such as information regarding the amount of resources scheduled by the primary cell or capacity of the primary cell may be needed.

The weight may or may not have a direct relation with the amount of resources scheduled by the primary node. This can depend on the algorithm used at the primary node to calculate the weights.

In accordance with an embodiment cell-specific uplink buffer status report (UL BSR) weights are calculated in a master node. A pico SCell specific weight can be reported back to the slave node. Then each scheduling node can weigh the reported BSR from the UE according to its specific weight before allocating UL resources on the specific cell.

Cell-specific UL BSR weights can be determined by the master eNB based on various information. For example, estimations of the uplink throughput that can be scheduled by each node can be used as basis of the determination. The estimation of the throughput that can be scheduled at the secondary node can be forwarded to the master node over X2 for the determination of the weights. Information such as an estimation of uplink throughput that can be scheduled by the primary node and measurements of the uplink throughput actually scheduled by the secondary node may also be used in determining the weights. In the latter case all this information can be measured / estimated by the primary node. An advantage of this is that there is no need to forward any information from the secondary nodes.

In accordance with an embodiment secondary nodes schedule uplink resources as much as they can. The primary node of the PCell can estimate the UL capacity of the secondary node / SCell based on UL data it receives, where after it can inform the node of the SCell about the PCell UL capacity and the SCell can adjust its scheduling accordingly if this is considered necessary.As mentioned above, information between primary and secondary nodes may be exchanged. The primary node may send the determined weight information and other information and the secondary node may send information for use in determining the weights. For example, an estimate of uplink data throughput that is available for scheduling of the uplink resources by the secondary node may be provided and the primary and secondary node can exchange information for the generation of the estimate. Data can be exchanged between the nodes over a logical interface between the nodes. For example, X2 interface may be used.

The primary node can receive information of estimated uplink data throughput available for scheduling by at least one secondary node, and can thereafter determine weighting for buffer status information and schedule at uplink resources for at least one communication device based at least in part on the estimate. For example, LTE eNBs can exchange information on the amount of UL throughput they plan to schedule in the future. By making information on the amount of data traffic scheduled by the primary node available at the secondary node overall scheduling efficiency may be improved. The information on the amount of data traffic may be provided in relative or absolute terms.

Use of estimates instead of actual measurements enables operation where the need to wait for the primary or master eNB to perform measurements of the scheduled throughput by the secondary or slave node(s) can be avoided before the slave node can determine the (relative) amount of UL traffic that it needs to schedule.

An estimate of the uplink throughput that can be scheduled at the secondary node for a specific UE can also be calculated based on information such as UL signal to interference plus noise ratio (SINR), configured primary node secondary node UL switching pattern and/or the load conditions in the relevant secondary cell.

It is noted that whilst embodiments have been described in relation to LTE, similar principles can be applied to any other communication system or indeed to further developments with LTE. Also, instead of carriers provided by base stations at least one of the carriers may be provided by a communication device such as a mobile user equipment. For example, this may be the case in application where no fixed equipment provided but a communication system is provided by means of a plurality of user equipment, for example in adhoc networks. Therefore, although certain embodiments were described above by way of example with reference to certain exemplifying architectures for wireless networks, technologies and standards, embodiments may be applied to any other suitable forms of communication systems than those illustrated and described herein.

The required data processing apparatus and functions of a base station apparatus, a communication device and any other appropriate apparatus may be provided by means of one or more data processors. The described functions at each end may be provided by separate processors or by an integrated processor. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non limiting examples. The data processing may be distributed across several data processing modules. A data processor may be provided by means of, for example, at least one chip. Appropriate memory capacity can also be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof. The software may be stored on such physical media as memory chips, or memory blocks implemented within the processor, magnetic media such as hard disk or floppy disks, and optical media such as for example DVD and the data variants thereof, CD.

The foregoing description has provided by way of exemplary and non-limiting examples a full and informative description of the exemplary embodiments of this invention. However, the invention is defned by the appended claims.

## Claims

1. A method for scheduling uplink resources, said method performed by a primary node and comprising:
determining (40, 60) scheduling weight information regarding said primary node and a secondary node,
signalling (42) the scheduling weight information regarding the secondary node to the secondary node,
receiving (62) buffer status information from a communication device having multiple wireless uplink data flows with the primary node and the secondary node,
applying the scheduling weight information regarding the primary node to the buffer status information, and
scheduling (64) uplink transmission for the communication device based on the weighted buffer status information.

2. A method for communicating buffer status information by a communication device, the method comprising:
receiving (52), from a primary node, scheduling weight information regarding the primary node and a secondary node, wherein the communication device has multiple wireless uplink data flows with the primary node and the secondary node;
weighting (54) a buffer status report based on the scheduling weight information regarding the primary node, and sending (56) the weighted buffer status report to the primary node;
weighting (54) the buffer status reported based on the scheduling weight information regarding the secondary node, and sending (56) the weighted buffer status report to the secondary node.

3. A method for controlling scheduling of uplink resources by a primary node, said method comprising:
determining (50, 60) scheduling weight information regarding the primary node and a secondary node;
signalling (52) the scheduling weight information to a communication device having multiple wireless uplink data flows with the primary node and the secondary node;
receiving (62) buffer status information from the communication device wherein the buffer status information is weighted with the scheduling weight information; and
scheduling (64) uplink transmission for the communication device based on the weighted buffer status information.

4. A method for controlling scheduling of uplink resources, said method being performed by a secondary node and where the method comprises:
receiving (60), from a primary node, scheduling weight information regarding said secondary node;
receiving (62) buffer status information from a communication device having multiple wireless uplink data flows with the primary node and the secondary node;
applying the scheduling weight information to the buffer status information; and
scheduling (64) uplink transmission for the communication device based on the weighted buffer status information.

5. The method of claim 1 or claim 3, wherein the step of determining the scheduling weight information comprises:
determining the scheduling weight information for the secondary node based on information about the uplink throughput of the secondary node, said information being received from the secondary node.

6. The method of claim 4, further comprising:
estimating uplink data throughput that is available for scheduling by said secondary node, and exchanging information about the estimated uplink data throughput with the primary node, wherein said information is for use by the primary node to determine said scheduling weight information.

7. The method of claim 1 or claim 3, wherein the step of determining the scheduling weight information comprises:
determining the weight information based on at least one of uplink signal to interference plus noise ratio, "SINR", a configured uplink switching pattern between the primary and secondary nodes and load conditions in a relevant cell associated with the secondary node.

8. An apparatus for use in a primary node, the apparatus comprising at least one processor, and at least one memory including computer program code, wherein the at least one memory and the computer program code are configured, with the at least one processor, to cause the primary node to perform the method steps of any of claims 1, 5 and 7.

9. An apparatus for use in a communication device, the apparatus comprising at least one processor, and at least one memory including computer program code, wherein the at least one memory and the computer program code are configured, with the at least one processor, to cause the communication device to perform the method steps of claim 2.

10. An apparatus for use in a primary node, the apparatus comprising at least one processor, and at least one memory including computer program code, wherein the at least one memory and the computer program code are configured, with the at least one processor, to cause the primary node to perform the method steps of any of claims 3, 5 and 7.

11. An apparatus for use in a secondary node, the apparatus comprising at least one processor, and at least one memory including computer program code, wherein the at least one memory and the computer program code are configured, with the at least one processor, to cause the secondary node to perform the method steps of any of claims 4 and 6.

12. A network node being a primary node comprising the apparatus of claim 8 or the apparatus of claim 10.

13. A user equipment being a communication device comprising the apparatus of claim 9.

14. A network node being a secondary node comprising the apparatus of claim 11.

15. A communication system comprising the network node of claim 12, the network node of claim 14 and the user equipment of claim 13.

16. A computer program comprising code which, when executed by a processor within a primary node, causes said primary node to perform the method steps of any of claims 1, 5 and 7.

17. A computer program comprising code which, when executed by a processor within a communication device, causes said communication device to perform the method steps of claim 2.

18. A computer program comprising code which, when executed by a processor within a primary node, causes said primary node to perform the method steps of any of claims 3, 5 and 7.

19. A computer program comprising code which, when executed by a processor within a secondary node, causes said secondary node to perform the method steps of any of claims 4 and 6.

## Patentansprüche

1. Verfahren zum Scheduling von Uplink-Ressourcen, wobei das Verfahren durch einen Primärknoten ausgeführt wird und Folgendes umfasst:
Bestimmen (40, 60) von Scheduling-Gewichtungsinformationen bezüglich des Primärknotens und eines Sekundärknotens,
Melden (42) der Scheduling-Gewichtungsinformationen bezüglich des Sekundärknotens an den Sekundärknoten,
Empfangen (62) von Pufferstatusinformationen von einer Kommunikationsvorrichtung, die mehrere drahtlose Uplink-Datenflüsse mit dem Primärknoten und dem Sekundärknoten aufweist,
Anwenden der Scheduling-Gewichtungsinformationen bezüglich des Primärknotens auf die Pufferstatusinformationen, und
Scheduling (64) einer Uplink-Übertragung für die Kommunikationsvorrichtung, basierend auf den gewichteten Pufferstatusinformationen.

2. Verfahren zum Übermitteln von Pufferstatusinformationen durch eine Kommunikationsvorrichtung, wobei das Verfahren Folgendes umfasst:
Empfangen (52), von einem Primärknoten, von Scheduling-Gewichtungsinformationen bezüglich des Primärknotens und eines Sekundärknotens, wobei die Kommunikationsvorrichtung mehrere drahtlose Uplink-Datenflüsse mit dem Primärknoten und dem Sekundärknoten aufweist;
Gewichten (54) eines Pufferstatusberichts, basierend auf den Scheduling-Gewichtungsinformationen bezüglich des Primärknotens, und Senden (56) des gewichteten Pufferstatusberichts an den Primärknoten;
Gewichten (54) des berichteten Pufferstatus, basierend auf den Scheduling-Gewichtungsinformationen bezüglich des Sekundärknotens und Senden (56) des gewichteten Pufferstatusberichts an den Sekundärknoten.

3. Verfahren zum Steuern eines Schedulings von Uplink-Ressourcen durch einen Primärknoten, wobei das Verfahren Folgendes umfasst:
Bestimmen (50, 60) von Scheduling-Gewichtungsinformationen bezüglich des Primärknotens und eines Sekundärknotens;
Melden (52) der Scheduling-Gewichtungsinformationen an eine Kommunikationsvorrichtung, die mehrere drahtlose Uplink-Datenflüsse mit dem Primärknoten und dem Sekundärknoten aufweist;
Empfangen (62) von Pufferstatusinformationen von der Kommunikationsvorrichtung, wobei die Pufferstatusinformationen mit den Scheduling-Gewichtungsinformationen gewichtet sind; und
Scheduling (64) einer Uplink-Übertragung für die Kommunikationsvorrichtung, basierend auf den gewichteten Pufferstatusinformationen.

4. Verfahren zum Steuern eines Schedulings von Uplink-Ressourcen, wobei das Verfahren durch einen Sekundärknoten ausgeführt wird und wobei das Verfahren Folgendes umfasst:
Empfangen (60), von einem Primärknoten, von Scheduling-Gewichtungsinformationen bezüglich des Sekundärknotens;
Empfangen (62) von Pufferstatus-Informationen von einer Kommunikationsvorrichtung, die mehrere drahtlose Uplink-Datenflüsse mit dem Primärknoten und dem Sekundärknoten aufweist;
Anwenden der Scheduling-Gewichtungsinformationen auf die Pufferstatusinformationen; und
Scheduling (64) der Uplink-Übertragung für die Kommunikationsvorrichtung, basierend auf den gewichteten Pufferstatusinformationen.

5. Verfahren gemäß Anspruch 1 oder Anspruch 3,
wobei der Schritt des Bestimmens der Scheduling-Gewichtungsinformationen Folgendes umfasst:
Bestimmen der Scheduling-Gewichtungsinformationen für den Sekundärknoten, basierend auf Informationen über den Uplink-Durchsatz des Sekundärknotens, wobei die Informationen von dem Sekundärknoten empfangen werden.

6. Verfahren gemäß Anspruch 4,
das ferner Folgendes umfasst:
Schätzen des Uplink-Datendurchsatzes, der für das Scheduling verfügbar ist, durch den Sekundärknoten, und Austauschen von Informationen über den geschätzten Uplink-Datendurchsatz mit dem Primärknoten, wobei die Informationen zur Verwendung durch den Primärknoten zum Bestimmen der Scheduling-Gewichtungsinformationen sind.

7. Verfahren gemäß Anspruch 1 oder Anspruch 3,
wobei der Schritt des Bestimmens der Scheduling-Gewichtungsinformationen Folgendes umfasst:
Bestimmen der Gewichtungsinformationen, basierend auf mindestens einem der folgenden Parameter: dem Uplink-Signal-zu-Interferenz-plus-Rauschen-Verhältnis ("SINR"), einem konfigurierten Uplink-Umschaltmuster zwischen dem Primärknoten und dem Sekundärknoten sowie Lastzuständen in einer relevanten Zelle, die mit dem Sekundärknoten assoziiert ist.

8. Vorrichtung zur Verwendung in einem Primärknoten,
wobei die Vorrichtung Folgendes aufweist:
mindestens einen Prozessor und mindestens einen Speicher, der Computerprogrammcode aufweist, wobei der mindestens eine Speicher und der Computerprogrammcode dazu konfiguriert sind, mit dem mindestens einen Prozessor den Primärknoten zu veranlassen, die Verfahrensschritte gemäß einem der Ansprüche 1, 5 und 7 auszuführen.

9. Vorrichtung zur Verwendung in einer Kommunikationsvorrichtung, wobei die Vorrichtung Folgendes aufweist:
mindestens einen Prozessor und mindestens einen Speicher, der Computerprogrammcode aufweist, wobei der mindestens eine Speicher und der Computerprogrammcode dazu konfiguriert sind, mit dem mindestens einen Prozessor die Kommunikationsvorrichtung zu veranlassen, die Verfahrensschritte gemäß Anspruch 2 auszuführen.

10. Vorrichtung zur Verwendung in einem Primärknoten,
wobei die Vorrichtung Folgendes aufweist:
mindestens einen Prozessor und mindestens einen Speicher, der Computerprogrammcode aufweist, wobei der mindestens eine Speicher und der Computerprogrammcode dazu konfiguriert sind, mit dem mindestens einen Prozessor den Primärknoten zu veranlassen, die Verfahrensschritte gemäß einem der Ansprüche 3, 5 und 7 auszuführen.

11. Vorrichtung zur Verwendung in einem Sekundärknoten,
wobei die Vorrichtung Folgendes aufweist:
mindestens einen Prozessor und mindestens einen Speicher, der Computerprogrammcode aufweist, wobei der mindestens eine Speicher und der Computerprogrammcode dazu konfiguriert sind, mit dem mindestens einen Prozessor den Sekundärknoten zu veranlassen, die Verfahrensschritte gemäß einem der Ansprüche 4 und 6 auszuführen.

12. Netzwerkknoten, der ein Primärknoten ist, der die Vorrichtung gemäß Anspruch 8 oder die Vorrichtung gemäß Anspruch 10 aufweist.

13. Benutzerausrüstung, die eine Kommunikationsvorrichtung ist, die die Vorrichtung gemäß Anspruch 9 aufweist.

14. Netzwerkknoten, der ein Sekundärknoten ist, der die Vorrichtung gemäß Anspruch 11 aufweist.

15. Kommunikationssystem, welches Folgendes aufweist:
den Netzwerkknoten gemäß Anspruch 12, den Netzwerkknoten gemäß Anspruch 14 und die Benutzerausrüstung gemäß Anspruch 13.

16. Computerprogramm, das einen Code aufweist, der dann, wenn er von einem Prozessor in einem Primärknoten ausgeführt wird, den Primärknoten dazu veranlasst, die Verfahrensschritte gemäß einem der Ansprüche 1, 5 und 7 auszuführen.

17. Computerprogramm, das einen Code aufweist, der dann, wenn er von einem Prozessor in einer Kommunikationsvorrichtung ausgeführt wird, die Kommunikationsvorrichtung dazu veranlasst, die Verfahrensschritte gemäß Anspruch 2 auszuführen.

18. Computerprogramm, das einen Code aufweist, der dann, wenn er von einem Prozessor in einem Primärknoten ausgeführt wird, den Primärknoten dazu veranlasst, die Verfahrensschritte gemäß einem der Ansprüche 3, 5 und 7 auszuführen.

19. Computerprogramm, das einen Code aufweist, der dann, wenn er von einem Prozessor in einem Sekundärknoten ausgeführt wird, den Sekundärknoten dazu veranlasst, die Verfahrensschritte gemäß einem der Ansprüche 4 und 6 auszuführen.

## Revendications

1. Procédé d'ordonnancement de ressource de liaison montante, ledit procédé étant effectué par un nœud primaire et comprenant :
l'établissement (40, 60) d'informations de pondération d'ordonnancement relatives au dit nœud primaire et à un nœud secondaire,
le signalement (42) des informations de pondération d'ordonnancement relatives au nœud secondaire au nœud secondaire,
la réception (62) d'informations de statut de tampon en provenance d'un dispositif de communication présentant de multiples flux de données sans fil de liaison montante avec le nœud primaire et le nœud secondaire,
l'application des informations de pondération d'ordonnancement relatives au nœud primaire aux informations de statut de tampon, et
l'ordonnancement (64) de transmissions à liaison montante pour le dispositif de communication sur la base des informations de statut de tampon pondérées.

2. Procédé de communication d'informations de statut de tampon par le biais d'un dispositif de communication, le procédé comprenant :
la réception (52), en provenance d'un nœud primaire, d'informations d'ordonnancement pondérées relatives au nœud primaire et à un nœud secondaire, selon lequel le dispositif de communication présente de multiples flux de données de liaison montante avec le nœud primaire et avec le nœud secondaire ;
la pondération (54) d'un rapport de statut de tampon sur la base des informations d'ordonnancement pondérées relatives au nœud primaire, et l'envoi (56) du rapport de statut de tampon pondéré au nœud primaire ;
la pondération (54) du statut de tampon rapporté sur la base des informations d'ordonnancement pondérées relatives au nœud secondaire, et l'envoi (56) du rapport de statut de tampon pondéré au nœud secondaire.

3. Procédé de commande d'ordonnancement de ressources de liaison montante par le biais d'un nœud primaire, ledit procédé comprenant :
l'établissement (50, 60) d'informations d'ordonnancement pondérées relatives au nœud primaire et à un nœud secondaire ;
le signalement (52) des informations d'ordonnancement pondérées à un dispositif de communication présentant de multiples flux de données de liaison montante avec le nœud primaire et avec le nœud secondaire ;
la réception (62) d'informations de statut de tampon en provenance du dispositif de communication, selon lequel les informations de statut de tampon sont pondérées avec les informations d'ordonnancement pondérées ; et
l'ordonnancement (64) de transmissions à liaison montante pour le dispositif de communication sur la base des informations de statut de tampon pondérées.

4. Procédé de commande d'ordonnancement de ressources de liaison montante, ledit procédé étant effectué par un nœud secondaire et selon lequel le procédé comprend :
la réception (60), en provenance d'un nœud primaire, d'informations d'ordonnancement pondérées relatives au nœud secondaire ;
la réception (62) d'informations de statut de tampon en provenance d'un dispositif de communication présentant de multiples flux de données de liaison montante avec le nœud primaire et avec le nœud secondaire ;
l'application des informations d'ordonnancement pondérées aux informations de statut de tampon ; et
l'ordonnancement (64) de transmissions à liaison montante pour le dispositif de communication sur la base des informations de statut de tampon pondérées.

5. Procédé selon la revendication 1 ou la revendication 3, selon lequel l'étape d'établissement des informations d'ordonnancement pondérées comprend :
l'établissement des informations d'ordonnancement pondérées pour le nœud secondaire sur la base d'informations relatives au débit montant du nœud secondaire, lesdites informations étant reçues du nœud secondaire.

6. Procédé selon la revendication 4, comprenant en outre :
l'estimation du débit de données montant qui est disponible pour un ordonnancement via ledit nœud secondaire, et l'échange d'informations relatives au débit de données montant estimé avec le nœud primaire, selon lequel lesdites informations sont destinées à une utilisation par le nœud primaire afin d'établir lesdites informations d'ordonnancement pondérées.

7. Procédé selon la revendication 1 ou la revendication 3, selon lequel l'étape d'établissement des informations d'ordonnancement pondérées comprend :
l'établissement des informations de pondération sur la base d'au moins un objet parmi le rapport de signal de liaison montante sur interférence plus bruit ("SINR"), un motif de commutation de liaison montante configurée entre les nœuds primaire et secondaire, et des conditions de charge dans une cellule pertinente associée au nœud secondaire.

8. Équipement destiné à une utilisation dans un nœud primaire, l'équipement comprenant au moins un processeur, et au moins une mémoire comportant du code de programmation informatique, selon lequel la au moins une mémoire et le code de programmation informatique sont configurés, avec le au moins un processeur, de faire fonctionner le nœud primaire afin de mettre en œuvre les étapes de procédé selon l'une quelconque des revendications 1, 5 et 7.

9. Équipement destiné à une utilisation dans un dispositif de communication, l'équipement comprenant au moins un processeur, et au moins une mémoire comportant du code de programmation informatique, selon lequel la au moins une mémoire et le code de programmation informatique sont configurés, avec le au moins un processeur, de faire fonctionner le dispositif de communication afin de mettre en œuvre les étapes de procédé selon la revendication 2.

10. Équipement destiné à une utilisation dans un nœud primaire, l'équipement comprenant au moins un processeur, et au moins une mémoire comportant du code de programmation informatique, selon lequel la au moins une mémoire et le code de programmation informatique sont configurés, avec le au moins un processeur, de faire fonctionner le nœud primaire afin de mettre en œuvre les étapes de procédé selon l'une quelconque des revendications 3, 5 et 7.

11. Équipement destiné à une utilisation dans un nœud secondaire, l'équipement comprenant au moins un processeur, et au moins une mémoire comportant du code de programmation informatique, selon lequel la au moins une mémoire et le code de programmation informatique sont configurés, avec le au moins un processeur, de faire fonctionner le nœud secondaire afin de mettre en œuvre les étapes de procédé selon l'une quelconque des revendications 4 et 6.

12. Nœud de réseau en tant que nœud primaire comprenant l'équipement selon la revendication 8 ou l'équipement selon la revendication 10.

13. Équipement utilisateur en tant que dispositif de communication comprenant l'équipement selon la revendication 9.

14. Nœud de réseau en tant que nœud secondaire comprenant l'équipement selon la revendication 11.

15. Système de communication comprenant le nœud de réseau selon la revendication 12, le nœud de réseau selon la revendication 14 et l'équipement utilisateur selon la revendication 13.

16. Programme d'ordinateur comprenant du code qui, lorsqu'il est exécuté par un processeur dans un nœud primaire, à pour effet de faire fonctionner ledit nœud primaire afin de mettre en œuvre les étapes de procédé selon l'une quelconque des revendications 1, 5 et 7.

17. Programme d'ordinateur comprenant du code qui, lorsqu'il est exécuté par un processeur dans un dispositif de communication, a pour effet de faire fonctionner le dispositif de communication afin de mettre en œuvre les étapes de procédé selon la revendication 2.

18. Programme d'ordinateur comprenant du code qui, lorsqu'il est exécuté par un processeur dans un nœud primaire, à pour effet de faire fonctionner ledit nœud primaire afin de mettre en œuvre les étapes de procédé selon l'une quelconque des revendications 3, 5 et 7.

19. Programme d'ordinateur comprenant du code qui, lorsqu'il est exécuté par un processeur dans un nœud secondaire, a pour effet de faire fonctionner ledit nœud secondaire afin de mettre en œuvre les étapes de procédé selon l'une quelconque des revendications 4 et 6.
